# EUROPÄISCHE PATENTSCHRIFT

(11) **EP 1 278 999 B1**
(45) Veröffentlichungstag und Bekanntmachung des Hinweises auf die Patenterteilung: **17.05.2006**
(21) Anmeldenummer: 01921104.4
(22) Anmeldetag: 26.04.2001
(51) Int. Cl.: G01B 5/30, G01B 7/16

(54) **MESSWERTAUFNEHMER**
MEASURING SENSOR
CAPTEUR DE MESURE

(30) Priorität: 03.05.2000 CH 863002000
(43) Veröffentlichungstag der Anmeldung: 29.01.2003
(73) Patentinhaber: HERA Rotterdam B.V., 3062 MA Rotterdam (NL)
(72) Erfinder: TANNER, Matthias, CH-8261 Hemishofen (CH)
(74) Vertreter: Breiter, Heinz
(86) Internationale Anmeldenummer: PCT/CH2001/000266
(87) Internationale Veröffentlichungsnummer: WO 2001/084073

(56) Entgegenhaltungen:
- EP-A- 0 357 966
- CH-A- 687 648
- US-A- 3 898 885
- US-A- 5 563 349

## Beschreibung

Die vorliegende Erfindung bezieht sich auf einen Messwertaufnehmer zum elektrischen Messen positiver und negativer Längs- und Querdehnungen an der Oberfläche von zylindrischen oder profilierten Körpern, welcher Messaufnehmer mehr als zweiteilig und im wesentlichen ringförmig, mit wenigstens einem Spannelement, ausgebildet ist, wobei zwei verspannbare Segmente längsmittig auf der Innenkontur je eine einander in Spannrichtung gegenüberüegende Aussparung mit einem überstehenden elastischen Teil und einem Messelement aufweisen, welches kraftschlüssig auf die Oberfläche des Körpers pressbar ist und mit dieser einen Reibschluss bildet.

Es sind Messwertaufnehmer bekannt, die mit zylindrischen oder bandförmigen elastischen Körpern einen Anpressdruck erzeugen, der ausreichend ist, dehnungsempfindliche Messelemente kraftschlüssig an eine Bohrungswand zu pressen. Solche Messwertaufnehmer werden beispielsweise in der US,A 5284062, welche einen zylinderförmigen Gegenstand aus elastomerem Material betrifft, und aus der CH,A 685575 bekannt, welche die bandförmige Gestaltung des elastischen Teiles betrifft.

Andere heute verwendete Systeme klemmen mittels Riemen oder Magneten Messbrücken mit Klingen in gleichbleibendem Abstand auf die Oberfläche von ebenen oder zylindrischen Objekten und messen so auftretende Dehnungen. Erstere Messwertaufnehmer haben den Nachteil, dass eine Bohrung ausgespart werden muss. Die zweite erwähnte Lösung ist sehr exponiert, die Messbrücken können rutschen und sind somit nicht industriell verwendbar.

Weiter wird in der CH,A 687648 ein Aufnehmer beschrieben, der die erwähnten Nachteile weitgehend vermeiden kann, indem elastische Elemente auf der Innenseite von zwei Kreisringhälften Messelemente so auf die äussere Oberfläche des Körpers pressen, dass die dort auftretenden Dehnungen gemessen werden können. Diese starren Messwertaufnehmer einer bestimmten Grösse eignen sich nur für einen verhältnismässig kleinen Durchmesserbereich. Weiter muss das Messobjekt am Messort im Schnitt exakt rund sein, für eckige Profile ist dieser Aufnehmer nicht vorgesehen.

Eine Variante des Aufnehmers gemäss der CH,A 687648 weist zwei Stäbe mit im Durchmesser runden Ausnahmen auf, welche wenigstens dem zu messenden Zylinder entsprechen. Auch dieser Aufnehmer eignet sich nur für einen bestimmten Durchmesserbereich. Bei einem Zylinder mit kleinerem Durchmesser als normal vorgesehen, kann die Vorrichtung bei ungünstigen Verhältnissen rutschen. Weiter kann diese Anordnung vibrationsempfindlich sein, da seitliche Führungen weitgehend fehlen.

Schliesslich sind auch Aufnehmer bekannt, die mittels Schrauben zwei Flachprofile, welche elastische Teile mit dehnungsempfindlichen Messelementen beinhalten, auf ein Vierkantprofil gepresst, so dass die Dehnung an diesem Profil gemessen werden kann. Diese Anordnung ist jedoch nur für Profile mit ebenen Aussenflächen geeignet.

Der vorliegenden Erfindung liegt die Aufgabe zugrunde, einen Messwertaufnehmer der eingangs beschriebenen Art zu schaffen, welcher einfach gebaut und vielseitig einsetzbar ist, kostengünstig arbeitet und für den robusten industriellen Betrieb geeignet ist.

Die Aufgabe wird erfindungsgemäss dadurch gelöst, dass die einander diagonal gegenüberliegenden, verspannbaren Segmente des Messwertaufnehmers beidends auswechselbare und/oder einstellbare seitliche Spann- und Führungsorgane für den zu messenden Körper aufweisen. Spezielle und weiterbildende Ausführungsformen der Erfindung sind Gegenstand von abhängigen Patentansprüchen.

Die Innenkontur der beiden Segmente ist je nach Querschnittsform und - dimensionen des zu messenden Körpers eckig oder rund ausgebildet, und im Bereich der Längsmitte der Segmente sind zwei elastische Elemente mit Messelementen angebracht. Werden die beiden Segmente in Verbindung mit den Führungsorganen mit geeigneten Spannorganen an den zu messenden Körper gepresst, drücken die elastischen Elemente mit den Messelementen so auf die Oberfläche des Körpers, dass die dort auftretenden Dehnungen gemessen werden können. Die seitlichen Führungsorgane dienen dabei einerseits als Führung, damit der Messwertaufnehmer nicht rutscht oder vibrationsempfindlich ist, andererseits können die Führungsorgane bei entsprechender Dimensionierung in Spannrichtung als mechanischer Anschlag zum Schutz vor zu hohen Aufspannkräften dienen.

Ein ganz wesentlicher Vorteil des erfindungsgemässen Messwertaufnehmers besteht auch darin, dass billige seitliche Führungsorgane ausgewechselt werden können, wogegen für zu messende Körper verschiedenen Durchmessers die gleichen teuren Segmente mit den Messelementen verwendbar sind.

Für das Verspannen sind insbesondere die beiden folgenden Ausführungsformen geeignet:
- Die Spannelemente sind beidends in den Segmenten verankerte Spannschrauben, welche selbst als seitliche Führungsorgane wirken können oder eine Bohrung in speziellen Führungsorganen durchgreifen.
- Auf der einen Seite der gegenüberliegenden Segmente ist - wieder unter Verwendung von Führungsorganen - ein Gelenk, auf der anderen Seite ein Schnellverschluss angeordnet, welcher die notwendige Anpresskraft für den Kraftschluss erzeugen kann.

Die beiden Segmente, welche die Messelemente enthalten, sind vorzugsweise in Spannrichtung und rechtwinklig dazu plansymmetrisch ausgebildet. Eine erste Standardform ist jochförmig ausgebildet, von im wesentlichen runder oder abgewinkelter Grundform, mit entsprechend runder oder abgewinkelter Innenkontur. Bezüglich der Form und Grösse sind die Segmente der Oberfläche des zu messenden Körpers angenähert, jedoch nicht exakt angepasst, damit wie erwähnt ein gewisser Spielraum für verschiedene Grössen besteht Der zu messende Körper liegt jedoch stets nur im Bereich des Messelements der beiden Segmente kraftschlüssig auf. Die beiden am zu messenden Körper angelegten Segmente haben beidends in Abstand verlaufende Stimflächen. Der Abstand der Stirnflächen der beiden Segmente erlaubt die Aufnahme von seitlichen Führungsorganen für den zu messenden Körper. Der Abstand a der Stirnflächen liegt zweckmässig bei wenigstens 20 % des Abstands der beiden . Messelemente, vorzugsweise bei mindestens 30 %.

Eine weitere Variante von Segmenten ist balkenförmig ausgebildet und angeordnet. d.h. die Segmente umschliessen den zu messenden Körper nicht, sondem sind unabhängig von dessen Querschnitt im wesentlichen plan ausgebildet. Die seitlichen Führungsorgane für den zu messenden Körper müssen entsprechend einstellbar, in der Regel auch auswechselbar sein.

Für die seitlichen Führungsorgane ergeben sich mehrere Varianten, beispielsweise:
- Würfel-, quader- oder zylinderförmig ausgebildete Führungsorgane haben eine zentrale Bohrung für eine durch diese führende, in den Segmenten verankerte Spannschraube. Die Führungsorgane können beliebig ausgewechselt werden und bezüglich des Querschnitts variieren. Die gespannten Führungsorgane berühren den zu messenden Körper vorzugsweise entlang einer Linie (Mantellinie bei querschnittlich runden Körpern oder Kante bei n-eckigen Körpern mit n = 6, 10, 14...) oder Fläche (bei n-eckigen Körpern mit n = 4, 8, 12...), jedoch ohne nennenswerte Reibungsverluste herbeizuführen. Alle diese verhältnismässig billigen Führungsorgane erlauben zu geringen Kosten eine grosse Varianz.
- Die vorstehend beschriebenen Führungsorgane können jedoch statt ausgewechselt auch seitlich verschoben werden, insbesondere wenn sie einen plattenförmigen Aufbau aufweisen, wobei die Plattenebenen rechtwinklig zur Spannrichtung verlaufen. Die einzelnen Plättchen, z. B. Kalibrierplättchen, haben zentrale Langlöcher und sind von einer oder in Abstand von zwei Spannschrauben durchgriffen. Nach dieser Ausführungsform ist die Flexibilität sehr hoch, es können Plättchen entfernt oder hinzugefügt und das optimale Plättchen an den zu messenden Gegenstand angestellt werden.
- Auch die Spannschrauben selbst können das seitliche Führungsorgan bilden, wenn ihr gegenseitiger Abstand auf den zu messenden Körper einstellbar ist. Ein Teil des Aussengewindes der Spannschrauben kann auch weggelassen werden, insbesondere im etwa längsmittigen Anschlagbereich an den zu messenden Körper.
- Insbesondere bei kleineren bis kleinen Durchmessern von zu messenden Körpern haben die Führungsorgane in Richtung des zu messenden Körpers zweckmässig abkragende Teile, welche auch an die Oberflächenform eines bestimmten Körpers angepasst sein können, was die Übemahme der Führungsfunktion erleichtert.

Die Messelemente sind vorzugsweise als Dehnmess-Streifen oder als Piezoelement ausgebildet, welche bei einer Dehnung in an sich bekannter Weise elektrische Signale abgeben.

Dank der erfindungsgemässen Lösung kann die Gefahr, dass sich eine zu starke Kraftanwendung bzw. Druckausübung nachteilig auswirkt, minimiert oder ganz beseitigt werden, indem die Führungsorgane mit grosser Präzision gefertigt und eingepasst sind. Sie bilden beim Festziehen der Spannschrauben einen Anschlag, welcher keine weitere Kraftübertragung auf die Messelemente zulässt.

Nach einer weiteren Variante können die Führungsorgane in Spannrichtung ein- oder beidseits mit einer elastischen Schicht von wenigen Zehntelsmillimetem Dicke ausgerüstet sein. Dadurch wird vermieden, dass beim Erreichen des Anschlags noch nicht die notwendige Kraft für den Reibschluss des Messelements erreicht ist.

Zusammenfassend kann festgehalten werden, dass der erfindungsgemässe Messwertaufnehmer somit auch ohne Bohrung im zu messenden Körper schnell und sicher montiert ist, die Messelemente sind geschützt und vibrationsfrei angebracht. Die Form der Segmente kann so gewählt werden, dass sich für jedes Segmentpaar ein sehr weiter Durchmesserbereich ergibt, womit sich die Messwertaufnehmer an Körpern mit variablem Profil und verschiedenen Durchmessern einfacher anbringen lassen. Diese vorteilhaften Eigenschaften werden mit keinem bisher bekannten Messwertaufnehmer erreicht.

Weiter wird erfindungsgemäss die Möglichkeit geschaffen, das dehnungsempfindliche Messelemente, wie Dehnmess-Streifen, ohne Klebstoff auf Oberflächen von zu messenden Körpern appliziert werden können, womit sich dank der einfachen, sicheren und universellen Montage neue technische Möglichkeiten ergeben. Die zweckmässig als Dehnmess-Streifen ausgebildeten dehnungsempfindlichen Messelemente sind bevorzugt kleiner als das elastische Teil, können aber auch gleich gross oder grösser sein.

Für die Erfassung von Längs- und Querdehnungen werden die Dehnmess-Streifen in axialer oder radialer Richtung angeordnet. Bei geeigneter Verschaltung zu einer Halb- oder Vollbrücke kann auch eine temperaturkompensierte Dehnungsmessung erreicht werden.

Zur Messung von Torsionsbeanspruchungen auf Körpern mit zylindermantelförmiger Oberfläche sind die Dehnmess-Streifen bevorzugt in einem Winkel von 45° zur Achse angepasst.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine teilweise geschnittene Stimansicht eines Messwertaufnehmers im Einbauzustand auf einem zylindrischen Körper mit grossem Durchmesser.
- Fig. 1a ein Detail von Fig. 1 im Bereich des Messelementes,
- Fig. 2 eine Variante gemäss Fig. 1 mit kleinem Durchmesser des zylindrischen Körpers,
- Fig. 3 eine Variante gemäss Fig. 1 mit einem achteckigen Körper,
- Fig. 4 eine Variante gemäss Fig. 1 mit an den Körperquerschnitt angepassten Führungsorganen,
- Fig. 5 eine Variante gemäss Fig. 1 mit den Spannschrauben als Führungsorganen,
- Fig. 6 eine Variante gemäss Fig. 1 mit im wesentlichen runden Segmenten,
- Fig. 7 eine Variante gemäss Fig. 6 mit plattenförmig aufgebauten Führungsorganen, und
- Fig. 8 eine Draufsicht auf ein Kalibrierplättchen gemäss Fig. 7.

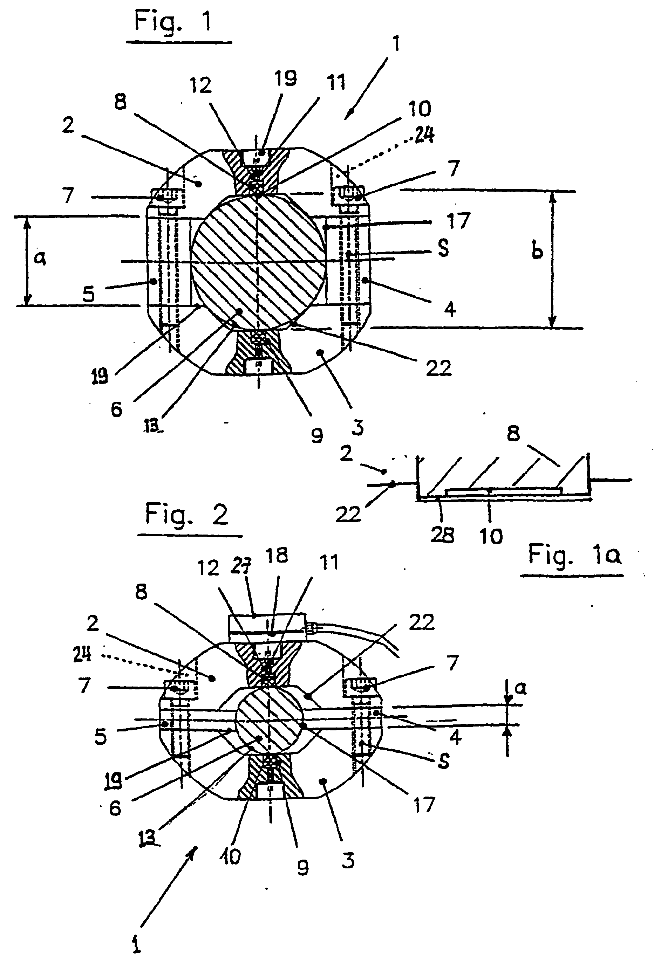

Ein in Fig. 1 dargestellter Messwertaufnehmer 1, bestehend aus zwei diagonal gegenüberliegenden Segmenten 2, 3 sowie zwei an den Stimseiten dazwischenliegenden Führungsorganen 4, 5, vorliegend als. Führungsorgane ausgebildet, ist auf einen zylindrischen Körper 6 aufgeschraubt. Dieser zu vermessende Körper 6 kann voll oder als Rohr, aber nach einer Variante auch als regelmässiges n-eckiges Profil ausgebildet sein, wobei n grösser als 2 und ganzzahlig sein muss.

Der Messwertaufnehmer 1 ist im wesentlichen vierteilig ausgebildet und wird mittels eines geeigneten Mechanismus, vorliegend mit Spannschrauben 7, auf den Körper 6 gepresst, wobei elastische Elemente 8, welche in innenliegende Ausfräsungen 9 eingebracht sind, mit hoher Kraft auf die Oberfläche 13 des Körpers 6 drücken.

Die Innenkontur 22 ist achteckig ausgebildet. Nach Varianten kann die Innenkontur 22 auch rund oder allgemein n-eckig sein, wobei zweckmässig gilt: n = 4, 6, 8, 10... ist, damit jeweils zwei parallel gegenüberliegende Flächen gebildet werden. Die in Fig. 1 dargestellte achteckige Ausführungsform ist in der Praxis bevorzugt.

Die Führungsorgane 4, 5 dienen der Zentrierung und mechanischen Stabilisierung bei wechselndem Durchmesser des Körpers 6. Einfachheitshalber wird der Abstand von zwei gegenüberliegenden Flächen eines n-eckigen Körpers hier und im Übrigen auch als Durchmesser bezeichnet.

Die Innenkontur 17 der Führungsorgane 4, 5 kann gemäss Fig. 1 flach, aber auch als Teil eines n-Eckes oder einer anderen Form des zu messenden Körpers angepasst sein. Bei der Messung von Körpern 6 von kreisförmigem oder regelmässigem n-eckigern Querschnitt sind die Führungsorgane 4, 5 so dimensioniert, dass der Abstand ihrer Innenkonturen 17 dem Abstand b der beiden Segmente 2, 3 in ihrem Messbereich entspricht. Wichtig ist, dass die Führungsorgane 4, 5 je an mindestens einem Punkt bzw. entlang einer Linie an dem zu messenden Körper 6 aufliegen und so eine stabilisierende und zentrierende Funktion ausüben können.

Wichtig ist weiter, dass das elastische Teil 8 mit einem auf der offenen Seite liegenden Messelement 10 etwas über die Innenkontur 22 des jeweiligen Segmentes 2, 3 hinausragt und somit problemlos angepresst werden kann. Die Stimflächen 19 beider Segmente 2, 3 haben einen Abstand a, wenn sie im Bereich der Messelemente 10 auf dem Körper 6 aufliegen. Die Führungsorgane 4, 5 haben eine exakt vorausbestimmte Dimension, welche a entspricht. Damit entsteht ein Schutz gegen eine zu starke Kraftanwendung.

Der Druck auf das dehnungsempfindliche Messelement 10 muss so hoch sein, dass zwischen diesem Messelement 10 und der Körperoberfläche 13 eine kraftschlüssige Verbindung, also ein Reibschluss, entsteht. So können auf den Körper 6 einwirkende, Dehnungen verursachende Kräfte mittels dehnungsempfindlicher Messelementen 10 gemessen werden. Die Messelemente 10 sind vor mechanischer Beschädigung geschützt und vibrationsfest angebracht.

Signalkabel 11 sind durch das elastische Teil 8 und durch eine Bohrung 12 zu einer Auswerteelektronik 18 (Fig. 2) geführt. Die Signalkabel 11 können in entsprechender Art und Weise auch axial abgeführt werden.

Fig. 1a zeigt einen zusätzlichen mechanischen Schutz eines dehnungsempfindlichen Messelementes 10 mittels einer Folie 28, welche über das elastische Element 8 und das dehnungsempfindliche Messelement 10 gelegt ist und mit geeigneten Mitteln am elastischen Teil 8 oder nach einer nicht dargestellten Variante grösser dimensioniert und an der Innenkontur 22 des betreffenden Segmentes 2, 3 befestigt ist.

Fig. 2 zeigt einen Messwertaufnehmer 1 mit einer integrierten Auswerteelektronik 18. Der Messwertaufnehmer 1 ist auf einem zylindrischen Körper 6 mit kleinerem Durchmesser als in Fig. 1 gespannt, wobei die Innenkontur 17 der auswechselbaren Führungsorgane 4, 5 der Oberfläche 13 des zylindrischen Körpers 6 angepasst sind. Im Vergleich zu Fig. 1 ist ersichtlich, dass durch einfaches. Auswechseln von kostengünstig herzustellenden Führungsorganen 4, 5 dieselben Segmente 2, 3 mit einem teuren Messelement 10 für unterschiedliche Durchmesser genutzt werden können. Die Führungsorgane 4, 5 haben in der Regel gleiche Abmessungen, wobei sichergestellt ist, dass die Messelemente 10 diagonal gegenüber aufgespannt sind. Somit kann durch Addition der beiden Messsignale die Biegung kompensiert werden. Subtrahiert man dagegen die beiden Messsignale, so resultiert die Biegung als verbleibende Komponente.

Das Messsignal kann durch eine sehr klein gehaltenen Auswerteelektronik 18, die im Segment 2 oder 3 bereits integriert ist, verstärkt abgeführt, oder durch eine andere Auswerteelektronik 18, welche mit einer Sendeeinrichtung verbunden ist, telemetrisch übertragen werden. Diese letzte Variante ist bei sich bewegenden oder rotierenden Körpern 6 besonders interessant.

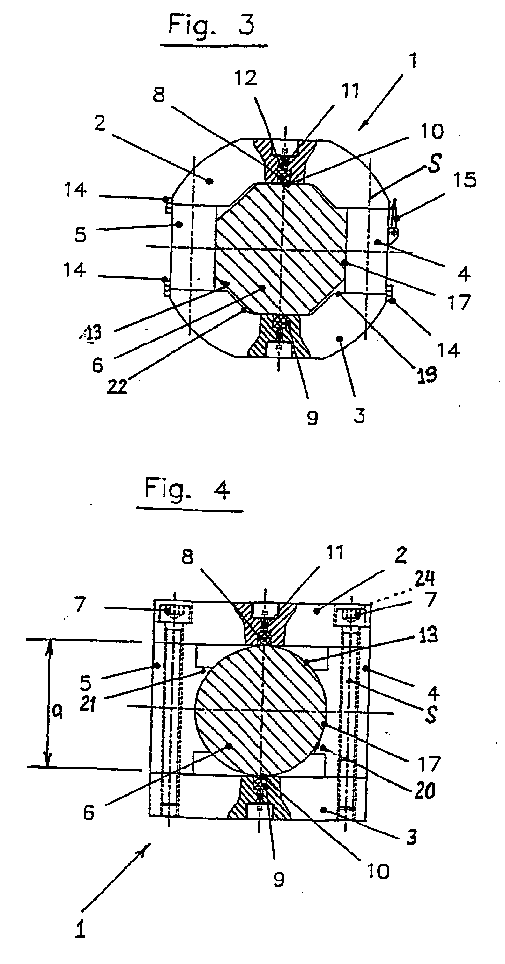

Fig. 3 zeigt einen Messwertaufnehmer 1, bei dem als Spannorgane Gelenke 14 und ein Schnellverschluss 15 eingesetzt sind. Die Gelenke 14 sind so ausgestaltet, dass die Führungsorgane 4, 5 austauschbar sind, daher können auch mit dieser Variante Dehnungen auf Körpern 6 mit verschiedenen Durchmessern bzw. wie vorliegend achteckige Körper 6 gemessen werden. Der zu messende Körper 6, kann - wie in den Ausführungsformen der übrigen Figuren - in Spannrichtung S nur auf der Innenkontur 22 der Segmente 2, 3 aufliegen.

Fig. 4 zeigt einen weiteren Messwertaufnehmer 1 mit flachen Segmenten 2, 3, welche balkenförmig ausgeführt sind. Die Führungsorgane 4, 5 haben in Richtung des Körpers 6 abkragende Teile 20, 21 und sind so gestaltet, dass sie den zylindrischen Körper 6 berühren oder an dessen Oberfläche 13 angepasst sind. So ist sichergestellt, dass die dehnungsempfindlichen Messelemente 10 nur diagonal gegenüberliegend am Körper 6 zu liegen kommen. Weiter zeigt Fig. 4, dass die Höhe a der Führungsorgane 4, 5 so bemessen ist, dass beim Festziehen der Spannschrauben 7 die balkenförmigen Segmente 2, 3 dann an den Führungsorganen 4, 5 aufsetzen, wenn die erforderliche Anpresskraft erreicht ist. Damit wird die zulässige Anpresskraft auch ohne Drehmomentbegrenzung der Spannschrauben 7 nicht überschritten. So kann bei entsprechender Höhe a der Führungsorgane 4, 5 ohne Risiko auf den Einsatz eines drehmomentbegrenzenden Schraubendrehers verzichtet werden. Diese Variante ist besonders kostengünstig in der Herstellung, da die balkenförmigen Segmente 2, 3 idealerweise als Flachprofil erhältlich sind.

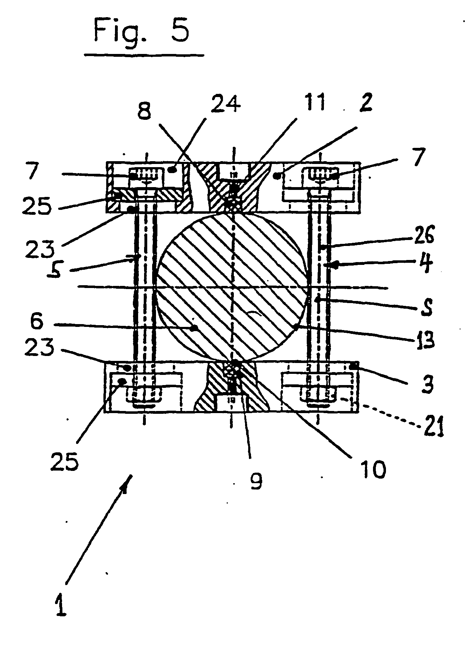

Fig. 5 zeigt einen Messwertaufnehmer 1, bei dem die Führungsorgane 4, 5 als verschiebbare Spannschrauben 7 ausgebildet sind. Diese Spannschrauben 7 mit Gegenmuttem 21 sitzen in rechtwinklig zur Spannrichtung S verlaufenden Langlöchern 23, welche in den balkenförmigen Segmenten 2, 3 entsprechend angebracht sind, und können durch Verschieben dem variablen Durchmesser des zu messenden Körpers angepasst werden, womit die seitliche Führung durch den Schraubenschaft 26 selbst gewährleistet ist. Zur einfacheren Bestimmung der Position der Spannschrauben 7 kann in einer vergrösserten Aussparung 24 für den Schraubenkopf ein passgenaues Plättchen 25 mit wenigstens einer Bohrung oder einem Langloch 30 (Fig. 8), letzteres wahlweise auch mit einer Skalierung, eingelegt sein. Die Lage der Bohrung/en bzw. der Spannschraube/n ist dabei abhängig vom Durchmesser des zu messenden Körpers 6. So wird erreicht, dass die Spannschrauben 7 so nahe an den zu messenden Körper 6 zu liegen kommen, dass sie wie die vorbeschriebenen Führungsorgane den Messwertaufnehmer 1 seitlich führen. Zugleich wird sichergestellt, dass die Messelemente 10 diagonal auf den zu messenden Körper 6 aufgespannt werden.

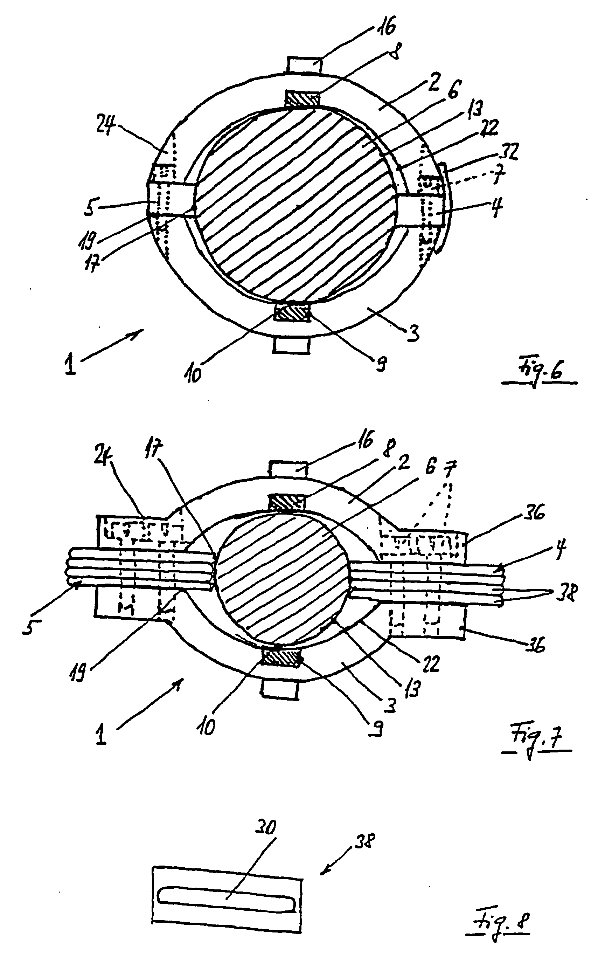

Die Ausführungsform gemäss Fig. 6 umfasst zwei Segmente 2, 3, welche im wesentlichen rund angeordnet sind. Deren Innenkontur 22 hat einen grösseren Radius als der Körper 6, weiter sind die Achsen der Segmente 2, 3 gegenüber derjenigen des zylinderförmigen Körpers 6 verschoben. Ausgehend vom elastischen Teil 8 mit dem Messelement 10 entsteht mit zunehmender Distanz ein sich öffnender Zwischenraum zwischen der Innenkontur 22 und der Oberfläche 13 des Körpers 6.

Der Körper 6 ist fixiert durch die auf dessen Oberfläche geschobenen Führungsorgane 4, 5, welche ihrerseits von je einer Spannschraube 7 gehaltert sind.

Im Bereich des einen Führungsorgans 4 ist ein elastisches Gummiplättchen 32 über das Führungsorgan gezogen und beidseits am Segment 2, 3 befestigt, beispielsweise festgeschraubt. Dadurch wird dem ganzen Messwertaufnehmer 1 ein elastisches "Scharnier" verliehen, welches die beiden Segmente zusammenhält, ohne die Spannbewegungen im geringsten zu stören.

Weiter ist im Bereich des Messelements 10 eine Steckbuchse 16 teilweise versenkt, teilweise abkragend an der Aussenseite der Segmente 2, 3 befestigt und mit einem Schutzdeckel versehen.

In der Ausführungsform nach Fig. 7 weisen die beiden Segmente 2, 3 endständige parallele Flansche 36 auf, welche durch zwei Spannschrauben 7 verbunden sind. Die beiden Führungsorgane 4, 5 sind aus aufeinandergelegten Kalibrierplättchen 38 mit einem Langloch 30 gebildet. Die gleich oder unterschiedlich dicken Kalibrierplättchen erlauben eine grosse Flexibilität bei kleiner Lager haltung. Die Kalibrierplättchen 38 können mit in die Langlöcher 30 eingeführten Spannschrauben einzeln am Körper 6 angestellt werden und bilden so eine optimale Führung, insbesondere bei Abrundung der entsprechenden Schmalseiten. Es können alle oder ein Teil der Kalibrierplättchen angestellt werden, wenigstens ein Paar im mittleren Bereich.

Bei einem grösseren Durchmesser als in Fig. 7 gezeigt, wird die Zahl der Kalibrierplättchen entsprechend erhöht, das Anstellen an den Körper erfolgt wie geschildert.

Das in Fig. 8 dargestellte Kalibrierplättchen hat ein Langloch 30, was ein stufenloses Verschieben in Längsrichtung erlaubt.

## Patentansprüche

1. Messwertaufnehmer (1) zum elektrischen Messen positiver und negativer Längs- und Querdehnungen an der Oberfläche von zylindrischen oder profilierten Körpern (6), welcher Messwertaufnehmer (1) mehr als zweiteilig und im wesentlichen ringförmig, mit wenigstens einem Spannelement (7, 15), ausgebildet ist, wobei zwei verspannbare Segmente (2, 3) längsmittig auf der Innenkontur (22) je eine einander in Spannrichtung (S) gegenüberliegende Aussparung mit einem überstehenden elastischen Teil (8) und einem Messelement (10) aufweisen, welches kraftschlüssig auf die Oberfläche des Körpers (6) pressbar ist und mit dieser einen Reibschluss bildet,
**dadurch gekennzeichnet, dass**
die einander diagonal gegenüberliegenden, verspannbaren Segmente (2, 3) des Messwertaufnehmers (1) beidends auswechselbare und/oder einstellbare seitliche Spann- und Führungsorgane (4, 5, 7, 14, 15 26; 38) für den zu messenden Körper (6) aufweisen.

2. Messwertaufnehmer (1) nach Anspruch 1, **dadurch gekennzeichnet, dass** die Spannorgane als an beiden Längsseiten der Segmente (2, 3) verankerte Spannschrauben (7) oder als ein an den Segmenten (2, 3) festgelegter Gelenk-Schnellverschluss (14, 15) ausgebildet sind.

3. Messwertaufnehmer (1) nach Anspruch 1, **dadurch gekennzeichnet, dass** die Segmente (2, 3) in Jochform, rund oder mehrfach abgewinkelt, ausgebildet sind, welche sich bezüglich der Form und Grösse der Oberfläche (13) des Körpers (6) annähert, dieser Körper (6) jedoch nur im Bereich des Messelements (10) aufliegt, wobei die Stimflächen (19) der Segmente (2, 3) einen Abstand (a) aufweisen, der vorzugsweise mindestens 20 %, insbesondere mindestens 30 % des Abstands (b) der Messelemente (10), beträgt.

4. Messwertaufnehmer (1) nach Anspruch 1 oder 2, **dadurch gekennzeichnet, dass** die Segmente (2, 3) balkenförmig ausgebildet sind.

5. Messwertaufnehmer (1) nach einem der Ansprüche 1 bis 4, **dadurch gekennzeichnet, dass** die Führungsorgane (4, 5) als würfel-, quader- oder zylinderförmig ausgebildet sind, mit einer zentralen Bohrung für eine die Segmente (2, 3) verbindende Spannschraube (7), wobei die Führungsorgane (4, 5) den Körper (6) vorzugsweise entlang einer Linie oder Fläche berühren und ihn ohne nennenswerte Reibungsverluste führen.

6. Messwertaufnehmer (1) nach einem der Ansprüche 1 bis 5, **dadurch gekennzeichnet, dass** die Führungsorgane (4, 5) ein Langloch (30) für die Spannorgane (7) haben, senkrecht zur Spannrichtung (S) plattenförmig unterteilt und so durch Anziehen wenigstens einer Spannschraube (7) pro Langloch (30) fixierbar sind.

7. Messwertaufnehmer (1) nach Anspruch 5 oder 6, **dadurch gekennzeichnet, dass** die Führungsorgane (4, 5) in Richtung des Körpers (6) abkragende Teile (20, 21) haben, welche die Führungsfunktion übemehmen.

8. Messwertaufnehmer (1) nach einem der Ansprüche 1 bis 4, **dadurch gekennzeichnet, dass** Spannschrauben (26) auch Führungsorgane (4, 5) sind, wobei ihr gegenseitiger Abstand entsprechend dem Körper (6) einstellbar ist.

9. Messwertaufnehmer (1) nach einem der Ansprüche 1 bis 8, **dadurch gekennzeichnet, dass** das Messelement (10) ein Dehnmess-Streifen oder Piezoelement ist.

10. Messwertaufnehmer (1) nach einem der Ansprüche 1 bis 9, **dadurch gekennzeichnet, dass** die metallischen Segmente (2, 3) und die Führungsorgane (4, 5) einen Anschlag für die Spannungsbegrenzung bilden.

## Claims

1. Transducer (1) for electrical measurement of positive and negative longitudinal and transverse extensions on the surface of cylindrical or profiled bodies (6), which transducer (1) comprises more than two pieces and is substantially annular, with at least one clamping element (7, 15), where two clampable segments (2, 3) each have, in their longitudinal centre on the inner contour (22) lying opposite each other in the clamping direction (S), a recess with a protruding resilient part (8) and a measurement element (10) that can be pressed by force onto the surface of the body (6) and forms a friction connection therewith,
**characterised in that**
the clampable segments (2, 3) of the transducer (1) lying diagonally opposite each other have at both ends interchangeable and/or adjustable side clamping and guide elements (4, 5, 7, 14, 15, 26, 38) for the body (6) to be measured.

2. Transducer (1) according to claim 1, **characterised in that** the clamping elements are formed as clamping screws (7) anchored on both long sides of the segments (2, 3) or as a hinged quick closure (14, 15) established on the segments (2, 3).

3. Transducer (1) according to claim 1, **characterised in that** the segments (2, 3) are formed in yoke form, round or with multiple edges, which approximate to the form and size of the surface (13) of the body (6) but lie on this body (6) only in the area of the measurement element (10), where the faces (19) of the segments (2, 3) have a spacing (a) that is preferably at least 20%, in particular at least 30%, of the spacing (b) of the measurement elements (10).

4. Transducer (1) according to claim 1 or 2, **characterised in that** the segments (2, 3) are formed bar-like.

5. Transducer (1) according to any of claims 1 to 4, **characterised in that** the guide elements (4, 5) are formed cuboid, parallelipipedic or cylindrical with a central bore for a clamping screw (7) connecting the segments (2, 3), where the guide elements (4, 5) touch the body (6) preferably along a line or surface and guide it without significant friction losses.

6. Transducer (1) according to any of claims 1 to 5, **characterised in that** the guide elements (4, 5) have a slot (30) for the clamping elements (7), are divided plate-like perpendicular to the clamping direction (S) and can be fixed by tightening at least one clamping screw (7) per slot (30).

7. Transducer (1) according to claim 5 or 6, **characterised in that** the guide elements (4, 5) have parts (20, 21) projecting in the direction of the body (6) which assume the guidance function.

8. Transducer (1) according to any of claims 1 to 4, **characterised in that** the clamping screws (26) are also the guide elements (4, 5) where their mutual distance is adjustable according to the body (6).

9. Transducer (1) according to any of claims 1 to 8, **characterised in that** the measurement element (10) is an extension measurement strip or piezo element.

10. Transducer (1) according to any of claims 1 to 9, **characterised in that** the metallic segments (2, 3) and the guide elements (4, 5) form a stop for stress limitation.

## Revendications

1. Capteur de mesure (1) destiné à la mesure électrique d'allongements longitudinaux et transversaux positifs et négatifs se produisant à la surface de corps (6) cylindriques ou profilés, ce capteur (1) étant sensiblement annulaire, composé de plus de deux éléments et comprenant au moins un organe de serrage (7, 15); dans ce capteur (1), deux segments pouvant être bloqués par serrage présentent chacun -sur leur contour intérieur, au niveau de leur milieu longitudinal- une cavité disposée en vis-à-vis de l'autre dans le sens du serrage et contenant un élément élastique (8) en saillie ainsi qu'un organe de mesure (10) apte à être mis en contact serré avec la surface du corps (6) en constituant avec celle-ci une connexion à friction, **caractérisé en ce que** les segments (2, 3) du capteur de mesure (1) -disposés diagonalement en vis-à-vis et pouvant être bloqués par serrage- comportent en leurs deux extrémités des organes latéraux (4, 5, 7, 14, 15, 26, 38) interchangeables et/ou réglables pour le serrage et le guidage du corps (6) à mesurer.

2. Capteur de mesure (1) selon la revendication 1, **caractérisé en ce que** les organes de serrage sont réalisés en tant que vis de serrage (7) ancrées aux deux extrémités longitudinales des segments (2, 3) ou bien en tant que dispositif articulé à fermeture rapide (14, 15) fixé sur les segments (2, 3).

3. Capteur de mesure (1) selon la revendication 1, **caractérisé en ce que** les segments (2, 3) sont en forme de joug rond ou anguleux qui, dans sa forme et dimension, se rapproche de celles de la surface (13) du corps (6), **en ce que** ce corps (6) ne se trouve toutefois en appui que dans la zone de l'organe de mesure (10), les faces frontales (19) des segments (2, 3) présentant entre elles une distance (a) qui est, de préférence, égale à 20 pourcent au moins, en particulier 30 pourcent au moins, de la distance (b) entre les organes de mesure (10).

4. Capteur de mesure (1) selon la revendication 1 ou 2, **caractérisé en ce que** les segments (2, 3) sont en forme de barre.

5. Capteur de mesure (1) selon l'une quelconque des revendications 1 à 4, **caractérisé en ce que** les organes de guidage (4, 5) sont en forme de cube, de parallélépipède ou de cylindre et comprennent un alésage central pour une vis de serrage (7) reliant les segments (2, 3), les organes de guidage (4, 5) touchant le corps (6) de préférence le long d'une ligne ou d'une surface en le guidant sans pertes significatives de friction.

6. Capteur de mesure (1) selon l'une quelconque des revendications 1 à 5, **caractérisé en ce que** les organes de guidage (4, 5) comprennent un trou oblong (30) pour les organes de serrage (7), **en ce que** ces organes (4, 5) sont subdivisés en plaquettes perpendiculairement au sens du serrage (S) et **en ce qu'**ils peuvent ainsi être fixés par le serrage d'au moins une vis (7) par trou oblong (30).

7. Capteur de mesure (1) selon la revendication 5 ou 6, **caractérisé en ce que** les organes de guidage (4, 5) comportent en direction du corps (6) des éléments en saillie qui assurent le guidage.

8. Capteur de mesure (1) selon l'une quelconque des revendications 1 à 4, **caractérisé en ce que** des vis de serrage (26) servent à la fois d'organes de guidage (4, 5), leur distance réciproque étant réglable en fonction du corps (6).

9. Capteur de mesure (1) selon l'une quelconque des revendications 1 à 8, **caractérisé en ce que** l'organe de mesure (10) est un extensomètre à résistance ou un élément piézométrique.

10. Capteur de mesure (1) selon l'une quelconque des revendications 1 à 9, **caractérisé en ce que** les segments métalliques (2, 3) et les organes de guidage (4, 5) constituent une butée pour la limitation du serrage.
